# EUROPEAN PATENT APPLICATION

(11) **EP 4 787 774 A1**
(43) Date of publication of application: **05.08.2026**
(21) Application number: 25859518.0
(22) Date of filing: 27.08.2025
(51) Int. Cl.: H04L 9/40

(54) **COMMUNICATION SYSTEM WITH ISOLATED INTERNAL AND EXTERNAL NETWORKS**

(30) Priority: 30.08.2024 CN 202411215050
(71) Applicant: Ruijie Networks Co., Ltd., Fuzhou, Fujian 350002 (CN)
(72) Inventor: LIN, Weiquan, Fuzhou, Fujian 350002 (CN)
(74) Representative: Boult Wade Tennant LLP
(86) International application number: PCT/CN2025/117362
(87) International publication number: WO 2026/046256

(57) **Abstract**

Example embodiments of this application provide a communication system with isolation between an internal network and an external network. The system includes an internal network subsystem, an external network subsystem, and a combiner system, where the internal network subsystem and the external network subsystem are two systems with mutually independent data flows: the internal network subsystem is connected to the combiner system and configured to output an internal network signal; the external network subsystem is connected to the combiner system and configured to output an external network signal; and the combiner system is configured to perform signal combining on the internal network signal output by the internal network subsystem and the external network signal output by the external network subsystem to output a combined signal.

## Description

### CROSS-REFERENCE TO RELATED APPLICATIONS

This application claims priority to Chinese Patent Application No. 202411215050.1, filed with the China National Intellectual Property Administration on August 30, 2024 and entitled "COMMUNICATION SYSTEM WITH ISOLATION BETWEEN INTERNAL NETWORK AND EXTERNAL NETWORK", which is incorporated herein by reference in its entirety.

### TECHNICAL FIELD

This application relates to communication technology, and in particular, to a communication system with isolation between an internal network and an external network.

### BACKGROUND

Due to the needs of smart hospital construction, medical systems generally require the provision of internal and external network services on hospital campuses. An internal network is used for wireless access by medical terminal devices such as handheld terminals and mobile ward round carts for hospital medical staff, and an external network is used to provide wireless network services for patients and their families. To ensure the security of internal network data, effective isolation between the internal and external networks is typically required. The so-called isolation means that a device connected to the internal network cannot obtain data through the external network, and similarly, a device connected to the external network cannot obtain data from the internal network.

In related solutions, two methods are typically used to implement isolation between an internal network and an external network. One method is software isolation, where a wireless access point (AP) is configured with service set identifiers (SSIDs) for different data areas, and access terminals for the corresponding data areas are assigned. A terminal can only access network resources through its own SSID, and the resource access permissions of the terminal are restricted based on the SSIDs of different data areas. A mapping table between SSIDs and service virtual local area networks (VLANs) is established. Through VLAN logical isolation, data areas are divided for access by different groups of people, thereby implementing secure isolation between the internal and external networks. The other method is physical isolation using two APs, with the internal and external networks each designed with a separate AP. The AP for the internal network is dedicated to handling internal network data, while the AP for the external network is dedicated to handling external network data.

### SUMMARY

Example embodiments of this application provide a communication system with isolation between an internal network and an external network.

According to a first aspect, example embodiments of this application provide a communication system with isolation between an internal network and an external network, including an internal network subsystem, an external network subsystem, and a combiner system, where the internal network subsystem and the external network subsystem are two systems with mutually independent data flows:
the internal network subsystem is connected to the combiner system and configured to output an internal network signal;
the external network subsystem is connected to the combiner system and configured to output an external network signal;
the combiner system is configured to perform signal combining on the internal network signal output by the internal network subsystem and the external network signal output by the external network subsystem to output a combined signal.

Example embodiments of this application provide a secure communication system capable of implementing isolation between an internal network and an external network. It uses two systems with mutually independent data flows, namely an internal network subsystem and an external network subsystem, to process internal network data and external network data respectively, ensuring the security of internal network data through hardware isolation. The communication system also uses a combiner system to output a combined signal in a unified manner, where the combined signal includes a network signal corresponding to the internal network and a network signal corresponding to the external network. The communication system with isolation between an internal network and an external network in this application is one AP, and both the internal network subsystem and the external network subsystem belong to a same AP. Therefore, one AP can output both network signals of the internal network and network signals of the external network, implementing isolation between the internal and external networks with one AP, thereby improving the security of the internal and external networks. Moreover, compared to the conventional physical isolation method using two APs, this solution reduces signal interference and hardware costs, lowering costs while ensuring communication quality.

Optionally, the combiner system includes an internal network radio frequency power division network, an external network radio frequency power division network, and a combiner network; where the internal network radio frequency power division network is configured to perform power division on the internal network signal output by the internal network subsystem to output a plurality of corresponding internal network sub-signals to the combiner network; the external network radio frequency power division network is configured to perform power division on any one external network signal output by the external network subsystem to output a plurality of corresponding external network sub-signals to the combiner network; and the combiner network is configured to perform signal combining on the internal network sub-signals and the external network sub-signals to output the combined signal.

In this embodiment, an internal network radio frequency power division network and an external network radio frequency power division network are arranged, which are capable of assigning one signal input to the radio frequency power division network to a plurality of output ports of the radio frequency power division network, thereby obtaining a plurality of internal network sub-signals and a plurality of external network sub-signals which are then output to the combiner network for combining. The obtained combined signal can be connected to more antennas, thereby expanding the network coverage. The internal network radio frequency power division network and the external network radio frequency power division network implement signal distribution and transmission for the internal network subsystem and the external network subsystem respectively, with no need to equip a separate signal source for each receiver. Since one AP can cover a plurality of rooms, the solution in the embodiments of this application effectively reduces costs. Therefore, by providing the radio frequency power division network to expand signals, this embodiment can reduce a quantity of APs, thereby lowering communication costs.

Optionally, the combiner system includes an internal network power amplification network, an external network power amplification network, and a combiner network; where
the internal network power amplification network is configured to perform amplification processing on the internal network signal output by the internal network subsystem to output an amplified internal network signal to the combiner network; the external network power amplification network is configured to perform amplification processing on the external network signal output by the external network subsystem to output an amplified external network signal to the combiner network; and the combiner network is configured to perform signal combining on the amplified internal network signal and the amplified external network signal to output the combined signal.

In this embodiment, an internal network power amplification network and an external network power amplification network are arranged, which are configured to amplify the internal network signal and the external network signal respectively, thereby achieving the signal enhancement effect. This facilitates better processing and use of these signals, meeting the system stability and signal quality requirements of the AP.

Optionally, the internal network subsystem includes a first radio chip, and the external network subsystem includes a second radio chip; where the first radio chip is configured to process a network signal of a first band; and the second radio chip is configured to process a network signal of a second band; where the first band is different from the second band.

In this embodiment, the radio chip of the internal network subsystem and the radio chip of the external network subsystem use different signal bands. Due to the different bands between the internal network subsystem and the external network subsystem, signal blocking and signal interference are avoided, improving the signal quality of the internal network signal and the external network signal.

Optionally, the communication system with isolation between an internal network and an external network further includes a common band radio chip; where the common band radio chip is configured to process a network signal of a common band, where the first band, the second band, and the common band are different from each other.

Herein, the communication system with isolation between an internal network and an external network provided in this embodiment is configured with a common band radio chip to output a signal of a common band different from signals of the internal network subsystem and the external network subsystem. The common band radio chip may be an independent radio chip, or may be implemented based on a chip inside the internal network subsystem or a chip inside the external network subsystem. Optionally, the network of the common band radio chip may be flexibly switched to the internal network subsystem or the external network subsystem according to settings. The solution of using a shared and switchable radio frequency channel can meet the transmission requirements of both the internal network subsystem and the external network subsystem for different bands. Compared to a solution where two APs require deployment of two common parts, this solution requires only one common part, thereby simplifying the system structure and further reducing costs.

Optionally, the communication system with isolation between an internal network and an external network further includes a microcontroller unit; where when the communication system with isolation between an internal network and an external network includes a common band radio chip, the microcontroller unit is configured to control the common band radio chip to connect to the internal network subsystem or to connect to the external network subsystem.

In this embodiment, a microcontroller unit (MCU) is arranged, which can be used to implement control of the entire communication system with isolation between an internal network and an external network. Specifically, the MCU is configured to control the switching of connection between the common band radio chip and the internal network subsystem or the external network subsystem, realizing flexible control of the network signal of the common band. Even if only one common band radio chip is arranged in this embodiment, the MCU can meet the output requirements for the network signals of the common band in both internal network and external network application scenarios through switching control, thereby improving the flexibility and reliability of the communication system with isolation between an internal network and an external network.

Optionally, the internal network subsystem includes a first central processing unit, and the external network subsystem includes a second central processing unit; where the first central processing unit is configured to send a first local area network address of the internal network subsystem to the microcontroller unit; the second central processing unit is configured to send a second local area network address of the external network subsystem to the microcontroller unit; and
the microcontroller unit is configured to: receive the first local area network address of the internal network subsystem and receive the second local area network address of the external network subsystem, where the external network subsystem is an external network subsystem installed at a same physical location as the internal network subsystem; and upload the first local area network address and the second local area network address to an access controller, so that the access controller configures the internal network subsystem and the external network subsystem as a companion network, and determines management and maintenance information of the internal network subsystem or management and maintenance information of the external network subsystem as maintenance information of the companion network.

In this embodiment, the internal network subsystem and the external network subsystem are each provided with an independent central processing unit (CPU) to manage their corresponding subsystems. Each CPU can collect a media access control (MAC) address of its corresponding subsystem. Based on the foregoing structure, a companion network function is provided in this embodiment. In this embodiment, since one AP has two MAC addresses for the internal network and the external network, the MCU can report the two MAC addresses together to an access controller (AC). The AC side configures the two received MAC addresses as a pair of companion MAC addresses. Because the two companion MAC addresses are at a same installation location, one installation location can be associated with the two MAC addresses, thereby establishing a relationship between the two MAC addresses and the installation location of the AP. In the future, regardless of at which MAC address the system detects a fault, the faulty AP can be found through the correspondence for maintenance, thereby reducing the maintenance difficulty and maintenance costs of the system.

Optionally, the first central processing unit is further configured to acquire first status information of the internal network subsystem, generate a first heartbeat packet based on the first status information, and send the first heartbeat packet to the microcontroller unit; the second central processing unit is further configured to acquire second status information of the external network subsystem, generate a second heartbeat packet based on the second status information, and send the second heartbeat packet to the microcontroller unit; and the microcontroller unit is configured to determine, based on the first heartbeat packet and the second heartbeat packet, whether the internal network subsystem and the external network subsystem have faults, and perform fault handling.

In this embodiment, each CPU can also be configured to acquire status information of its corresponding subsystem and transmit the status information to the MCU in the form of a heartbeat packet. The MCU analyzes the heartbeat packet to implement fault monitoring for the internal network subsystem and the external network subsystem and automatically perform fault handling, thereby improving the reliability, security, and stability of the system.

Optionally, the microcontroller unit is further configured to: generate status information of the communication system with isolation between an internal network and an external network based on the first heartbeat packet and the second heartbeat packet; and upload the status information of the communication system with isolation between an internal network and an external network to an access controller, so that the access controller stores the status information of the communication system with isolation between an internal network and an external network.

The MCU can also report real-time monitored status information of the communication system with isolation between an internal network and an external network to the AC. The AC can record faults based on the status information of the communication system with isolation between an internal network and an external network, facilitating troubleshooting and device maintenance, thereby reducing the maintenance difficulty and maintenance costs of the system.

Optionally, a buzzer is installed at a physical location corresponding to the companion network; and the microcontroller unit is further configured to: in response to a sounding instruction for the buzzer, acquire buzzer information of the companion network corresponding to the sounding instruction for the buzzer; and generate a buzzer control instruction based on the buzzer information to control the buzzer at the physical location corresponding to the companion network to sound.

In this application, a buzzer is arranged at the installation location of the AP. Once a specific AP fails, the operation and maintenance personnel can initiate a buzzer sounding instruction in the system, and the system can trigger the buzzer at the corresponding installation location of the AP to sound, implementing accurate positioning of the faulty AP. This allows the operation and maintenance personnel to quickly locate the faulty AP for maintenance.

Optionally, the communication system with isolation between an internal network and an external network further includes a first power circuit and a second power circuit: the first power circuit is configured to supply power to the internal network subsystem; and the second power circuit is configured to supply power to the external network subsystem.

In this embodiment, the internal network subsystem and the external network subsystem are each configured with a separate power circuit to supply power to the internal network subsystem and the external network subsystem, thereby improving the stability of the system.

Optionally, the communication system with isolation between an internal network and an external network further includes a microcontroller unit, a first power converter, and a second power converter; where the first power converter is configured to convert first electrical energy output by the first power circuit to obtain first converted electrical energy, and output the first converted electrical energy to supply power to the microcontroller unit; and the second power converter is configured to convert second electrical energy output by the second power circuit to obtain second converted electrical energy, and output the second converted electrical energy to supply power to the microcontroller unit.

In this embodiment, a first power converter (DCDC) and a second power converter are arranged, and an MCU is arranged to manage the communication system with isolation between an internal network and an external network. The power of the MCU comes from the first converted electrical energy obtained by converting the output electrical energy of the first power circuit through the first power converter, and comes from the second converted electrical energy obtained by converting the output electrical energy of the second power circuit through the second power converter. These two power converters and the corresponding power circuits are mutually independent. As long as one of the power sources has electricity, the MCU can operate normally, improving the stability of the communication system with isolation between an internal network and an external network and ensuring the normal and stable operation of the communication system with isolation between an internal network and an external network.

Optionally, the first power circuit includes a first powered device detection module, and the second power circuit includes a second powered device detection module; where
the first powered device detection module is configured to send a first indication signal to the microcontroller unit, where the first indication signal is used to indicate a power supply status of the first power circuit; the second powered device detection module is configured to send a second indication signal to the microcontroller unit, where the second indication signal is used to indicate a power supply status of the second power circuit; and the microcontroller unit is configured to determine the power supply status of the first power circuit and the power supply status of the second power circuit through the first indication signal and the second indication signal, and control, based on the power supply status of the first power circuit and the power supply status of the second power circuit, whether the first power circuit supplies power to the internal network subsystem and/or the external network subsystem, and whether the second power circuit supplies power to the internal network subsystem and/or the external network subsystem.

Herein, this embodiment adopts a dual-power and single-control solution. The MCU is capable of receiving the first indication signal sent by the first powered device detection module in the first power circuit, and receiving the second indication signal sent by the second powered device detection module in the second power circuit. The indication signals can indicate the power supply status of the corresponding power circuits. Based on the first indication signal and the second indication signal, the MCU can accurately determine the power supply status of the first power circuit and the power supply status of the second power circuit. Based on different power supply statuses, the MCU can control the power sources of the internal network subsystem and the external network subsystem, as well as the power supply systems corresponding to the first power circuit and the second power circuit, to meet the power supply needs in various scenarios. This improves the power supply flexibility of the communication system with isolation between an internal network and an external network and enhances the stability of the communication system with isolation between an internal network and an external network.

The communication system with isolation between an internal network and an external network provided in this embodiment uses two systems with mutually independent data flows, namely an internal network subsystem and an external network subsystem, to process internal network data and external network data respectively, ensuring the security of internal network data through hardware isolation. The communication system also uses a combiner system to output a combined signal in a unified manner, where the combined signal includes a network signal corresponding to an internal network and a network signal corresponding to an external network. The communication system with isolation between an internal network and an external network in the embodiments of this application is one AP, and both the internal network subsystem and the external network subsystem belong to a same AP. Therefore, one AP can output both network signals of the internal network and network signals of the external network, implementing isolation between the internal and external networks with one AP, thereby improving the security of the internal and external networks. Moreover, compared to the conventional physical isolation method using two APs, this solution reduces signal interference and hardware costs, lowering costs while ensuring communication quality.

### BRIEF DESCRIPTION OF DRAWINGS

The accompanying drawings herein, which are incorporated into this specification and constitute a part of this specification, illustrate embodiments in accordance with this application and, together with this specification, explain the principles of the example embodiments of this application.
FIG. 1 is a schematic diagram of an architecture of an AP-STA communication system according to an embodiment of this application;
FIG. 2 is a schematic diagram of a framework structure of a communication system with isolation between an internal network and an external network according to an embodiment of this application;
FIG. 3 is a schematic diagram of a framework structure of another communication system with isolation between an internal network and an external network according to an embodiment of this application;
FIG. 4 is a schematic diagram of a framework structure of still another communication system with isolation between an internal network and an external network according to an embodiment of this application;
FIG. 5 is a schematic diagram of a framework structure of yet another communication system with isolation between an internal network and an external network according to an embodiment of this application;
FIG. 6 is a schematic diagram of a control relationship between a microcontroller unit and a first central processing unit and a second central processing unit according to an embodiment of this application; and
FIG. 7 is a schematic diagram of a framework structure of a power supply system of a communication system with isolation between an internal network and an external network according to an embodiment of this application.

### Reference signs in the drawings:

11. AP; 12. first STA; 13. second STA; 14. third STA; 15. fourth STA;
101. combiner system; 102. internal network subsystem; 103. external network subsystem;
1011. internal network radio frequency power division network; 1012. external network radio frequency power division network; 1013. combiner network;
104. common band radio chip;
500. microcontroller unit; 501. first central processing unit; 502. second central processing unit;
701. first power circuit; 702. second power circuit; 703. first power converter; 704. second power converter;
7011. first powered device detection module; 7021. second powered device detection module;
705. first analog switch; and 706. second analog switch.

The above accompanying drawings illustrate specific embodiments of this application, which will be described in more detail below. These drawings and written descriptions are not intended to limit the scope of the concepts of this application in any way, but rather to explain the concepts of this application to those skilled in the art by reference to specific embodiments.

### DESCRIPTION OF EMBODIMENTS

Example embodiments are described in detail herein, examples of which are illustrated in the accompanying drawings. When the accompanying drawings are involved in the following descriptions, unless otherwise indicated, the same numbers in different drawings represent the same or similar elements. The implementations described in the following example embodiments do not represent all implementations consistent with the example embodiments of this application. Rather, they are merely examples of the apparatuses and methods consistent with some aspects of this application as detailed in the appended claims.

The terms "first", "second", "third", "fourth", and the like (if present) used in the specification, claims, and accompanying drawings of this application are used to distinguish between similar objects and are not necessarily used to describe a specific order or sequence. It should be understood that the data used in this manner is interchangeable in appropriate circumstances, such that the embodiments of this application described herein can be implemented in other orders than those illustrated or described herein. In addition, the terms "include" and "have" and any of their variants are intended to cover a non-exclusive inclusion. For example, a process, method, system, product, or device that includes a series of steps or units is not necessarily limited to those steps or units expressly listed, but may include other steps or units not expressly listed or inherent to such process, method, product, or device.

To ensure the security of internal network data, effective isolation between the internal and external networks is typically required. The so-called isolation means that a device connected to the internal network cannot obtain data through the external network, and similarly, a device connected to the external network cannot obtain data from the internal network. How to effectively implement the isolation between an internal network and an external network in a cost-effective manner while ensuring the convenience of daily operation and maintenance has become a pain point for users in medical scenarios.

The related technical solutions mainly include the following three types:
One method is software isolation. In this method, an AP configures service set identifiers (SSIDs) for different data areas, and assigns access terminals to the corresponding data areas. A terminal can only access network resources through its own SSID, and the resource access permissions of the terminal are restricted based on the SSIDs of different data areas. A mapping table between SSIDs and service virtual local area networks (VLANs) is established. A data service area is divided into a demilitarized zone (DMZ) and a core data zone, with the paths and permissions for a service VLAN to access the DMZ zone and core data zone configured. When a user is connected to a network through a corresponding SSID, internal network data is accessed and peripheral data is isolated based on the path and permission. Through VLAN logical isolation, data areas are divided for access by different groups of people, thereby implementing secure isolation between the internal and external networks. This solution uses software logic to isolate the internal and external networks, with insufficient security performance. Once attacked, it is susceptible to software tampering, posing risks to the security of internal network data.

The second method is physical isolation using two APs, with the internal and external networks each designed with a separate AP. The AP for the internal network is dedicated to handling internal network data, while the AP for the external network is dedicated to handling external network data. Although this solution provides hardware isolation, it has the following disadvantages: Using two APs to implement physical isolation function results in high costs. Two APs double the overall construction and operation and maintenance workload. Since the same area needs to be covered, the internal network AP and the external network AP need to be deployed at the same location, which leads to mutual signal suppression. The main reason for the suppression phenomenon is that two APs are used for signal coverage of the internal and external networks respectively. The conventional practice in the industry is to use two APs of a same model to reduce research and development investment. Moreover, to cover the same area, the two APs need to be placed close to each other during deployment. Since the two APs are of the same model, their internal filter designs are also the same, both being full-band filters, and the bands of the signals output by the two APs are totally the same. When a first AP transmits a signal, due to the same signal band, reception at a second AP experiences interference, affecting signal quality and user experience. Similarly, when the second AP transmits a signal, the first AP is also affected. In addition, the 2.4 GHz parts of the two APs are totally independently controlled. If the 2.4 GHz parts of both APs are turned on at the same time, mutual interference also occurs. In actual use or operation and maintenance, considerable effort is required to ensure that only one of the two APs has the 2.4 GHz part turned on, so as to guarantee the transmission quality of the 2.4 GHz part.

The third method is also physical isolation using two APs. The internal network uses a two-stage architecture, where a first stage generates an internal network wireless signal which is connected to a second stage through a long radio frequency feeder cable; and the second stage performs radio frequency-level signal amplification on the internal network signal, and then divides the signal into a plurality of parts, with each part distributed to a different room to implement internal network signal coverage for each room. In this solution, the external network has only one stage, which directly generates a wireless signal, and then divides the wireless signal into a plurality of parts, with each part distributed to a different room to implement external network signal coverage for each room. Although this solution provides hardware isolation, it has the following disadvantages: An internal network signal undergoes two-stage amplification, and the amplification introduces noise, leading to degraded signal quality. Consequently, the final signal coverage effect is weaker than that of a one-stage architecture. The solution uses a large number of long radio frequency cables (typically 18- or 35-meter radio frequency feeder cables between the two stages), which imposes significant restrictions on actual installation and deployment. This solution is infeasible when the distance exceeds 35 meters. Moreover, long radio frequency feeder cables are expensive. Due to architectural limitations, the entire solution only supports up to 64 rooms and cannot support more rooms without adding an additional set of equipment.

From the above solutions, it can be seen that the related technologies have technical problems: the software isolation method has insufficient network security, while the physical isolation method has poor signal quality and high implementation costs.

An embodiment of this application provides a communication system with isolation between an internal network and an external network, which uses two systems with mutually independent data flows, namely an internal network subsystem 102 and an external network subsystem 103, to process internal network data and external network data respectively, and uses a combiner system 101 to output the data. The security of internal network data is ensured through hardware isolation, reducing costs while ensuring communication quality.

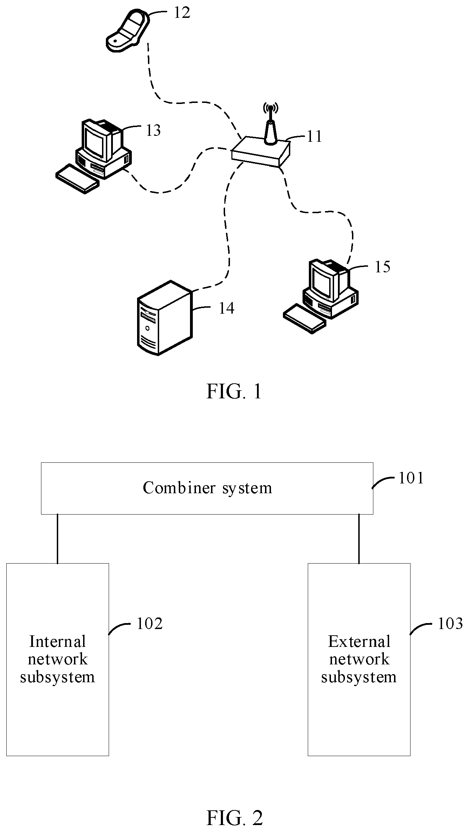

By way of example, FIG. 1 is a schematic diagram of an architecture of an AP-STA communication system according to an embodiment of this application. As shown in FIG. 1, the AP-STA communication system provided in the embodiment of this application includes an AP 11, a first STA 12, a second STA 13, a third STA 14, and a fourth STA 15.

In the AP-STA communication system, a device providing network access services is called an AP, that is, a wireless access point.

The communication system with isolation between an internal network and an external network provided in the embodiments of this application may serve as the AP 11 in the AP-STA communication system shown in FIG. 1 to provide network services to any STA accessing the AP-STA communication system. When the communication system with isolation between an internal network and an external network provided in embodiments of this application serves as AP 11, network services for the internal network and external network can be provided through one AP, reducing costs while ensuring communication quality. Moreover, the security of internal network data can be ensured through internal hardware isolation.

In the foregoing AP-STA communication system, a device that connects to the AP and then connects to the network is called a station (STA). The STA may be a terminal device such as a personal computer or a mobile phone. In an application scenario of medical systems, the STA may also be a medical terminal device such as a handheld terminal and a mobile ward round cart for hospital medical staff.

The first STA 12, the second STA 13, the third STA 14, and the fourth STA 15 may all be connected to the AP 11. After the first STA 12, the second STA 13, the third STA 14, and the fourth STA 15 are connected to the AP 11, the AP 11 provides network services for the first STA 12, the second STA 13, the third STA 14, and the fourth STA 15.

It can be understood that FIG. 1 is merely illustrative, and the structure in FIG. 1, the quantities of APs and STAs in FIG. 1, and their connection relationship are not specifically limited in the embodiments of this application.

Optionally, in an application scenario of a medical system, one AP in the embodiments of this application may be provided with a plurality of antennas, where each antenna is capable of simultaneously outputting an internal network wireless signal and an external network wireless signal. Based on the a plurality of antennas corresponding to the AP, signals of the AP can cover a plurality of wards, and the antenna deployed in each ward can be connected to a plurality of STAs to implement coverage of internal and external network signals at low costs.

The following describes in detail the technical solutions of this application and how the technical solutions of this application solve the above-mentioned technical problems through specific embodiments. The following specific embodiments can be combined with each other, and identical or similar concepts or processes may not be repeated in some embodiments. The following describes the embodiments of this application with reference to the accompanying drawings.

FIG. 2 is a schematic diagram of a framework structure of a communication system with isolation between an internal network and an external network according to an embodiment of this application. As shown in FIG. 2, the communication system with isolation between an internal network and an external network includes a combiner system 101, an internal network subsystem 102, and an external network subsystem 103.

The internal network subsystem 102 is connected to the combiner system 101 and configured to output an internal network signal; the external network subsystem 103 is connected to the combiner system 101 and configured to output an external network signal; and the combiner system 101 is configured to perform signal combining on the internal network signal output by the internal network subsystem 102 and the external network signal output by the external network subsystem 103 to output a combined signal.

Herein, the external network signal and the internal network signal, as well as the combined signal obtained by combining the external network signal and the internal network signal, can provide wireless access services for a STA through an antenna of a wireless access network.

Optionally, an output end of the combiner system 101 is connected to an antenna, and through the antenna, the STA can use the wireless access service of the network.

Optionally, in an embodiment of this application, a wireless access signal may be input. This process is the reverse of the foregoing process of outputting a combined signal. Specifically, the combiner system 101 receives a combined signal, performs splitting processing on the combined signal to obtain the internal network signal and/or external network signal corresponding to the combined signal, and inputs the internal network signal and/or external network signal to the corresponding internal network subsystem 102 and/or external network subsystem 103 for processing, thereby outputting the corresponding internal network wired signal and/or external network wired signal.

Optionally, the internal network subsystem 102 includes a first radio chip, and the external network subsystem 103 includes a second radio chip; where the first radio chip is configured to process a network signal of a first band; and the second radio chip is configured to process a network signal of a second band; where the first band is different from the second band.

In some embodiments, the first radio chip is a RADIO-5.8GHz chip, and the second radio chip is a RADIO-5.2GHz chip or a RADIO-2.4GHz chip.

In some embodiments, the first radio chip is a RADIO-5.2GHz chip, and the second radio chip is a RADIO-5.8GHz chip or a RADIO-2.4GHz chip.

In some embodiments, the first radio chip may alternatively be a RADIO-2.4GHz chip, or the second radio chip may alternatively be a RADIO-2.4GHz chip or a RADIO-5.8GHz chip.

The embodiments of this application do not specifically limit the signal bands of each subsystem. Radio chips of different signal bands are configured for the internal network subsystem 102 and the external network subsystem 103, which can effectively reduce mutual interference between signals of the internal network subsystem 102 and the external network subsystem 103, thereby improving signal quality.

Specifically, the 2.4 GHz signal band has wide coverage and strong wall penetration ability, and can be applied in scenarios requiring large coverage. Both 5.8 GHz and 5.2 GHz belong to the 5 GHz signal band, with less interference, and can meet the needs of short-distance, high-speed data transmission. The signal bands of each radio chip are not specifically limited in the embodiments of this application, and may be flexibly set according to actual conditions and needs.

The RADIO chip, that is, the radio frequency integrated circuit (RFIC), mainly functions to implement reception and transmission of radio signals. Through its internal circuit structure, it can convert a digital signal into a radio wave for transmission, and can also convert a received radio wave into a digital signal for processing.

In the embodiments of this application, the radio chip of the internal network subsystem 102 and the radio chip of the external network subsystem 103 use different signal bands. Due to the different bands between the internal network subsystem 102 and the external network subsystem 103, signal blocking and signal interference are avoided, improving the signal quality of the internal network signal and the external network signal.

Optionally, the internal network subsystem 102 includes a first end and a second end, where the second end of the internal network subsystem 102 is connected to the combiner system 101 in FIG. 2, and the first end of the internal network subsystem 102 is connected to an internal wired network to receive internal network data input from the internal wired network.

Optionally, the external network subsystem 103 includes a first end and a second end, where the first end of the external network subsystem 103 is connected to the combiner system 101 in FIG. 2, and the second end of the external network subsystem 103 is connected to an external wired network to receive external network data input from the external wired network.

Optionally, the first end of the internal network subsystem 102 is connected to the internal wired network through an optical fiber or a network cable; and the first end of the external network subsystem 103 is connected to the external wired network through an optical fiber or a network cable.

The communication system with isolation between an internal network and an external network provided in the embodiments of this application supports deployment using an optical fiber or a network cable, improving deployment flexibility. Even if the deployment distance is long, communication can still be implemented, further improving the deployment flexibility of the communication system with isolation between an internal network and an external network.

In one possible implementation, the internal network subsystem 102 includes a first radio chip, a first central processing unit 501, a first physical layer, and a first network interface connector; where a first end of the first network interface connector is connected to the internal wired network, and a second end of the first network interface connector is connected to a first end of the first physical layer; a second end of the first physical layer is connected to a first end of the first central processing unit 501, and a second end of the first central processing unit 501 is connected to a first end of the first radio chip; and a second end of the first radio chip is connected to the combiner system 101.

In one possible implementation, the external network subsystem 103 includes a second radio chip, a second central processing unit 502, a second physical layer, and a second network interface connector; where a first end of the second network interface connector is connected to the external wired network, and a second end of the second network interface connector is connected to a first end of the second physical layer; a second end of the second physical layer is connected to a first end of the second central processing unit 502, and a second end of the second central processing unit 502 is connected to a first end of the second radio chip; and a second end of the second radio chip is connected to the combiner system 101.

Both the first CPU and the second CPU are provided with their own MAC layers. The MAC layer is mainly responsible for protocol operations of a data link layer, including functions such as assembly of data frames, sending and receiving of frames, management of Ethernet addresses. The MAC layer in the internal network subsystem 102 may be connected to the first physical layer (PHY layer), and the MAC layer in the external network subsystem 103 may be connected to the second PHY. The MAC layer and the PHY layer communicate and coordinate with each other through an interface. The MAC layer passes a data frame to the PHY layer and controls the sending and receiving of data, while the PHY layer passes physical layer information to the MAC layer for processing. The PHY layer is responsible for converting data into a signal suitable for transmission on a physical medium and restoring the received signal to the data at the receiving end.

In the embodiments of this application, the internal network subsystem 102 and the external network subsystem 103 are two mutually independent systems, each subsystem having its independent CPU, radio chip, network interface connector, and physical layer PHY. An analog signal of the internal wired network and an analog signal of the external wired network can be converted into wireless access network signals of the internal network and the external network respectively through their respective CPUs, radio chips, network interface connectors, and PHYs. The internal network subsystem 102 and the external network subsystem 103 implement secure and reliable physical isolation between the internal and external networks through independent hardware, improving communication security.

Optionally, the first network interface connector and the second network interface connector may be RJ45 interfaces, which may be used to connect the system to an Ethernet cable. The RJ45 interface defines a standardized 8-pin interface for plugging into an end of an Ethernet cable and transmits data through a twisted pair.

Optionally, the first network interface connector and the second network interface connector may be any kind of optical fiber connector, which may be used to connect each subsystem to an Ethernet optical fiber.

Optionally, the first radio chip includes a first band unit, and the second radio chip includes a second band unit; where a signal band of the first band unit is the first band, and a signal band of the second band unit is the second band.

Optionally, both the first band and the second band are 5 GHz bands, and the first band and the second band are different.

Since the 5 GHz signal band has less interference, it can meet the requirements for short-distance, high-speed data transmission, improving the network quality of the internal network subsystem and the external network subsystem. Moreover, it can meet the requirements for short-distance, high-speed data transmission in an application scenario of medical systems.

In the embodiments of this application, the radio chip of the internal network subsystem 102 and the radio chip of the external network subsystem 103 use different signal bands, avoiding signal blocking and signal interference between the internal network subsystem 102 and the external network subsystem 103, and improving the signal quality of the internal wireless access network and the external wireless access network.

Based on the internal network subsystem 102 and the external network subsystem 103 in FIG. 2, and the internal structures of the internal network subsystem 102 and the external network subsystem 103 in the foregoing embodiments, each subsystem includes a path of "wired-data processing-wireless signal", ensuring physical isolation of internal and external network data. The following describes a working process in which the communication system with isolation between an internal network and an external network outputs a wireless signal. Taking an output process of the internal network subsystem 102 as an example, the working process is as follows.

Step 1.1. Internal network data enters a physical isolation system for internal and external network data through an internal network RJ45 interface.

Step 1.2. A PHY chip of the internal network processes the internal network data from the internal network RJ45 interface to convert it into internal network high-speed data.

Step 1.3. The CPU of the internal network receives the internal network high-speed data from the PHY chip of the internal network, processes it through an internal MAC module, and forwards the data to the RADIO chip of the internal network.

Step 1.4. The RADIO chip of the internal network converts the received data into an internal network signal.

Through the foregoing processing, the conversion from a wired signal to a wireless signal is implemented. The conversion from a wireless signal to a wired signal is the reverse of the foregoing process. A processing manner of the external network subsystem 103 is the same as a processing manner of the internal network subsystem 102, and is not repeated herein.

An embodiment of this application provides a secure communication system capable of implementing isolation between an internal network and an external network, which uses two systems with mutually independent data flows, namely an internal network subsystem 102 and an external network subsystem 103, to process internal network data and external network data respectively, ensuring the security of internal network data through hardware isolation. The communication system also uses a combiner system 101 to output a combined signal in a unified manner, where the combined signal includes a network signal corresponding to an internal network and a network signal corresponding to an external network. The communication system with isolation between an internal network and an external network in the embodiment of this application is one AP, and both the internal network subsystem and the external network subsystem belong to a same AP. Therefore, one AP can output both network signals of the internal network and network signals of the external network, implementing isolation between the internal and external networks with one AP, thereby improving the security of the internal and external networks. Moreover, compared to the conventional physical isolation method using two APs, this solution reduces signal interference and hardware costs, lowering costs while ensuring communication quality.

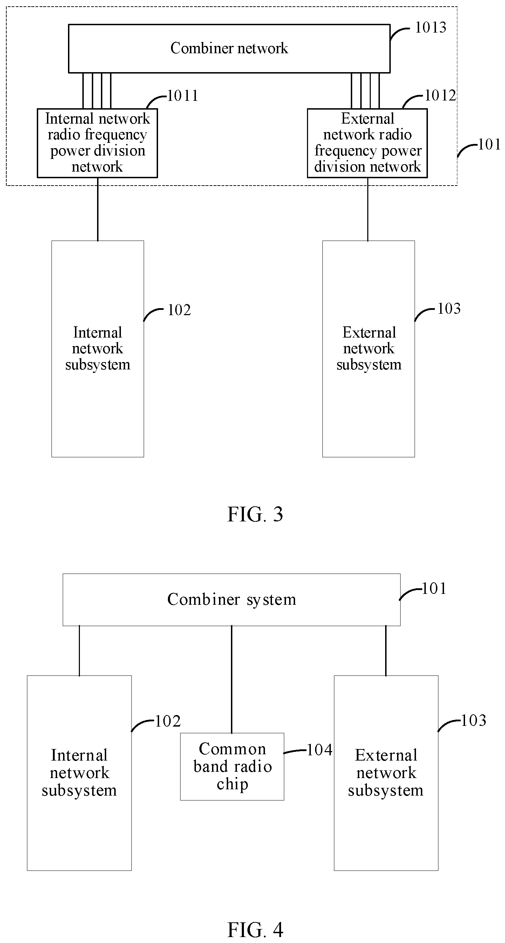

FIG. 3 is a schematic diagram of a framework structure of another communication system with isolation between an internal network and an external network according to an embodiment of this application. As shown in FIG. 3, on the basis of FIG. 2, a combiner system 101 provided in the embodiment of this application may include an internal network radio frequency power division network 1011, an external network radio frequency power division network 1012, and a combiner network 1013.

The internal network radio frequency power division network 1011 is configured to perform power division on the internal network signal output by the internal network subsystem 102 to output a plurality of corresponding internal network sub-signals to the combiner network 1013. The external network radio frequency power division network 1012 is configured to perform power division on any one external network signal output by the external network subsystem 103 to output a plurality of corresponding external network sub-signals to the combiner network 1013. The combiner network 1013 is configured to perform signal combining on the internal network sub-signals and the external network sub-signals to output a combined signal.

Optionally, in FIG. 3, taking both the internal network radio frequency power division network 1011 and the external network radio frequency power division network 1012 being 1-to-4 radio frequency power division networks for example, if the internal network subsystem 102 outputs one internal network signal to the internal network radio frequency power division network 1011, the internal network radio frequency power division network 1011 may output four internal network sub-signals to the combiner network 1013; if the external network subsystem 103 outputs one external network signal to the external network radio frequency power division network 1012, the external network radio frequency power division network 1012 may output four external network sub-signals to the combiner network 1013. Based on this configuration, the combiner network 1013 can provide, through four antennas, four wireless access signals covering both the internal and external networks. FIG. 3 is merely illustrative. In a specific process, the internal network subsystem 102 and the external network subsystem 103 each may output two or more network signals, and each of the network signals output by the internal network subsystem 102 and the external network subsystem 103 may be connected to one radio frequency power division network. A quantity of output ports of the internal network radio frequency power division network 1011 and that of the external network radio frequency power division network 1012 may also be any quantity greater than one.

A quantity of internal network sub-signals and a quantity of external network sub-signals may be the same or different, and the quantity of internal network sub-signals and the quantity of external network sub-signals are determined by the quantity of output ports of the internal network radio frequency power division network 1011 and the quantity of output ports of the external network radio frequency power division network 1012.

It can be understood that any one radio frequency power division network in any embodiment of this application may be a radio frequency power division network with any quantity of output ports, such as a 1-to-2, 1-to-4, or 1-to-8 radio frequency power division network.

Based on the communication system with isolation between an internal network and an external network in the foregoing embodiments, its combined signal can provide a wireless access service through an antenna. One antenna can be configured through one switch to provide the wireless access service within one room, so the combined signal output by one antenna can cover one room. To reduce the overall network construction costs, one AP needs to cover more rooms, which requires more combined signals to be output, that is, splitting a transmission signal of one AP into more parts. The radio frequency power division network can implement the foregoing function. However, as the signal is split into more parts, signal power of each part also becomes smaller, leading to poorer signal power in each room. Therefore, a quantity of signal splits has an upper limit. Optionally, splitting the signal of each radio frequency channel into four parts can both meet the signal quality in each room and control the costs.

From a theoretical analysis, a greater quantity of rooms covered by one AP means less APs needed for the entire network, lower cost, and simpler operation and maintenance, because the quantity of APs in the entire network is reduced. Conversely, a smaller quantity of rooms covered by one AP means higher cost and more difficult operation and maintenance. Therefore, the configuration of the radio frequency power division network can reduce costs. In one possible implementation, taking both the internal network radio frequency power division network 1011 and the external network radio frequency power division network 1012 being 1-to-4 radio frequency power division networks for example, a processing procedure of the radio frequency power division network is described.

The RADIO chip may be a single-channel chip or a dual-channel chip.

Herein, single-channel means that the RADIO chip has only one radio frequency channel, that is, only one output port, and one RADIO chip can output one network signal; and dual-channel means that the RADIO chip has two radio frequency channels, that is, the RADIO chip has two output ports and can output two network signals.

By way of example, if one RADIO chip has two radio frequency channels, the RADIO chip includes two output ports. For any one radio frequency signal processed by the RADIO chip, the radio frequency signal can be output separately through the two output ports, that is, one RADIO chip outputs two radio frequency signals. Each radio frequency signal is split into four parts, so eight parts of radio frequency signals can be output. Each part of radio frequency signal is provided to one room, implementing signal coverage for eight rooms.

Optionally, the CPU chip or RADIO chip selected for processing network signals may also be a single chip outputting two signals or four signals. The embodiments of this application do not specifically limit the quantity of signals.

Optionally, for the internal network signal and the external network signal output by the internal network subsystem 102 and the external network subsystem 103, the internal network radio frequency power division network 1011 and the external network radio frequency power division network 1012 each split the respective signals into four parts and send them to the combiner network 1013 to combine with RADIO signals of different bands. A total of eight radio frequency signals are output, where each radio frequency signal output includes the radio frequency signals corresponding to the internal network subsystem 102 and the external network subsystem 103.

Optionally, the combiner network 1013 includes a filter module. Taking a 5.8 GHz signal for example, a portion of the combiner network 1013 that processes the 5.8 GHz signal includes a 5.8 GHz filter, which can perform filtering processing on signals at the 5.2 GHz and 2.4 GHz parts, resolving the problem of mutual interference between signals. The circuits for the 2.4 GHz and 5.2 GHz parts also include filters at their respective operating bands to implement the same function. Finally, the combiner network 1013 distributes the eight signals to different antennas.

In this solution, based on the system in the foregoing embodiments, one AP splits a radio frequency signal into eight parts. Through a radio frequency cable, each part of the radio frequency signal is transmitted to one room and connected to an antenna deployed in that room, thereby implementing signal coverage for eight rooms which are referred to as one cell. The entire ward is divided into several cells, each cell being covered by one independent AP. One AP can cover a plurality of rooms through the radio frequency power division network in the foregoing solution, and the total quantity of supported rooms is not limited. This resolves the problem that the two-stage architecture solution has limitations on the quantity of covered rooms.

Optionally, when the communication system with isolation between an internal network and an external network is used for input of wireless signals, that is, reception of wireless signals, before the internal network wireless signal and the external network wireless signal are input to the internal network subsystem 102 and the external network subsystem 103, processing such as signal combining and signal amplification may also be performed through the internal network radio frequency power division network 1011 and the external network radio frequency power division network 1012, facilitating the processing of network signals.

In some possible implementations, the RADIO chip of the internal network converts a received signal into an internal network radio frequency signal, amplifies the signal through a front-end module (FEM) chip, and finally sends the amplified signal to the internal network radio frequency power division network 1011. The RADIO chip of the external network converts a received signal into an external network radio frequency signal, amplifies the signal through a FEM chip, and finally sends the amplified signal to the external network radio frequency power division network 1012.

It can be understood that in the foregoing embodiments, each subsystem and each network and component inside the entire system can both input network signals/digital signals and output network signals/digital signals, including the internal network subsystem 102, the external network subsystem 103, the combiner system 101, and the like. The input and output of a same subsystem, network, and component are reverse processes of each other.

In the embodiments of this application, the internal network radio frequency power division network 1011 and the external network radio frequency power division network 1012 are arranged, which are capable of assigning one signal input to the radio frequency power division network to a plurality of output ports of the radio frequency power division network, thereby obtaining a plurality of internal network sub-signals and a plurality of external network sub-signals which are then output to the combiner network 1013 for combining. The obtained combined signal can be connected to more antennas, thereby expanding the network coverage. The internal network radio frequency power division network 1011 and the external network radio frequency power division network 1012 implement signal distribution and transmission for the internal network subsystem 102 and the external network subsystem 103 respectively, with no need to equip a separate signal source for each receiver. Since one AP can cover a plurality of rooms, the solution in the embodiments of this application effectively reduces costs. Therefore, in the embodiments of this application, the radio frequency power division network is arranged to extend signals, thereby reducing the quantity of APs and lowering communication costs.

Optionally, the combiner system 101 includes an internal network power amplification network, an external network power amplification network, and a combiner network 1013.

The internal network power amplification network is configured to perform amplification processing on the internal network signal output by the internal network subsystem 102 to output an amplified internal network signal to the combiner network 1013; the external network power amplification network is configured to perform amplification processing on the external network signal output by the external network subsystem 103 to output an amplified external network signal to the combiner network 1013; and the combiner network 1013 is configured to perform signal combining on the amplified internal network signal and the amplified external network signal to output the combined signal.

Optionally, the internal network power amplification network may be arranged between the internal network radio frequency power division network 1011 and the internal network subsystem 102, or may be arranged between the internal network radio frequency power division network 1011 and the combiner network 1013.

Optionally, the external network power amplification network may be arranged between the external network radio frequency power division network 1012 and the external network subsystem 103, or may be arranged between the external network radio frequency power division network 1012 and the combiner network 1013.

Optionally, the internal network radio frequency power division network 1011 and the external network radio frequency power division network 1012 may each further include a signal amplification function.

Optionally, the combiner network 1013 may further include a signal amplification function.

Optionally, in the embodiments of this application, at least one additional amplification circuit may be arranged outside the combiner system 101. The amplification network may be arranged at any position of the communication system with isolation between an internal network and an external network to implement signal amplification during the network signal processing process, thereby improving signal quality.

In the embodiments of this application, an internal network power amplification network and an external network power amplification network are arranged, which are configured to amplify the internal network signal and the external network signal respectively, thereby achieving the signal enhancement effect. This facilitates better processing and use of these signals, meeting the system stability and signal quality requirements of the AP.

FIG. 4 is a schematic diagram of a framework structure of still another communication system with isolation between an internal network and an external network according to an embodiment of this application. As shown in FIG. 4, the communication system with isolation between an internal network and an external network provided in the embodiment of this application may include an internal network subsystem 102, an external network subsystem 103, a combiner system 101, and a common band radio chip 104.

Specifically, the common band radio chip 104 is connected to the combiner system 101.

Optionally, the combiner system 101 includes a common band radio frequency power division network and a combiner network 1013, where the common band radio chip 104 is connected to the combiner network 1013 through the common band radio frequency power division network.

Optionally, the common band radio chip 104 is configured to output a common band network signal.

Optionally, the common band radio chip 104 is further configured to process an input common band network signal. When the communication system with isolation between an internal network and an external network is used for input of wireless signals, that is, reception of wireless signals, the following processing procedure takes place:

A network signal is input to the combiner network 1013 in the system through at least one antenna. The combiner network 1013 performs splitting on the network signal to obtain an internal network signal, an external network signal, and a common band network signal. These network signals can be input to the internal network subsystem 102, the external network subsystem 103, and the common band radio chip 104 or their corresponding subsystems respectively for processing.

Through the radio frequency combining solution, network signals of different bands are combined for output, reducing the quantity of external interfaces of the AP. This ultimately achieves the effect of reducing the quantity of radio frequency cables, and realizes the goal of halving the wire cost, antenna cost, and deployment cost, further reducing communication costs.

Optionally, the common band radio frequency power division network internally includes an amplification circuit.

Optionally, an amplification network is arranged between the common band radio chip 104 and the combiner system 101 to implement signal amplification.

The common band radio chip 104 is configured to process a network signal of a common band, where the first band, the second band, and the common band are different from each other.

The common band radio chip 104 may provide wireless access services, including inputting a wireless signal of a common band and outputting a wireless signal of a common band. The wireless signal of the common band may be an internal network wireless signal or an external network wireless signal. In the embodiments of this application, the common band radio chip 104 can switch to the internal network or switch to the external network.

Optionally, the common band radio chip 104 may be a radio chip for processing any one of a 5.8 GHz, 5.2 GHz, or 2.4 GHz wireless network.

Optionally, the common band radio chip 104 may be a chip independent of the internal network subsystem 102 and the external network subsystem 103, and the common band radio chip 104 corresponds to a common band subsystem provided in the communication system with isolation between an internal network and an external network. A structure of the common band subsystem is the same as that of the internal network subsystem 102 and the external network subsystem 103.

Optionally, the common band radio chip 104 may be a chip inside the internal network subsystem 102 or the external network subsystem 103, or implement a common band processing function based on a chip inside the internal network subsystem 102 or the external network subsystem 103.

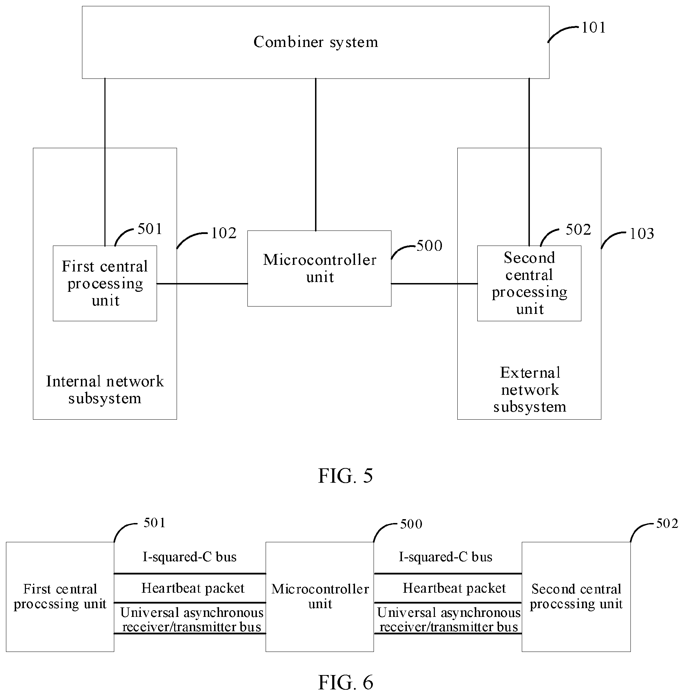

Specifically, taking a signal corresponding to the internal network subsystem 102 being 5 GHz, a signal corresponding to the external network subsystem 103 being 5 GHz, and a signal corresponding to the common band subsystem being 2.4 GHz for example, a signal band corresponding to the internal network subsystem 102 and a signal band corresponding to the external network subsystem 103 are different. The internal network subsystem 102, the external network subsystem 103, and the common radio frequency subsystem may include the following four devices:
a first central processing unit 501 (as shown in FIG. 5) arranged in the internal network subsystem 102, not including a radio chip function;
a first radio chip arranged in the internal network subsystem 102, including a first band unit and a third band unit and capable of implementing 5 GHz and internal network 2.4 GHz radio functions;
a second central processing unit 502 (as shown in FIG. 5) arranged in the external network subsystem 103, including a fourth band unit and capable of implementing an external network 2.4 GHz radio chip function; and
a second radio chip arranged in the external network subsystem 103, including a second band unit and capable of implementing a 5 GHz external network radio function.

The third band unit and the fourth band unit share one processing path.

Optionally, an output end of the common radio frequency subsystem is connected to the combiner system 101.

The 2.4 GHz band signal can be switched between the internal and external networks based on user requirements. Sharing the 2.4 GHz radio frequency signal processing path can reduce costs. Without this design, the costs for two sets of paths are required.

Optionally, the communication system with isolation between an internal network and an external network further includes a microcontroller unit 500; where when the communication system with isolation between an internal network and an external network includes a common band radio chip 104, the microcontroller unit 500 is configured to control the common band radio chip 104 to connect to the internal network subsystem 102 or to connect to the external network subsystem 103.

Through the control of the MCU, flexible switching of the common band between the internal network and the external network can be implemented.

In the embodiments of this application, an MCU is arranged, which can be used to implement control of the entire communication system with isolation between an internal network and an external network. Specifically, the MCU is configured to control the switching of connection between the common band radio chip 104 and the internal network subsystem 102 or the external network subsystem 103, realizing flexible control of the network signal of the common band. Even if only one common band radio chip 104 is arranged in the embodiments of this application, the MCU can meet the output requirements for the network signals of the common band in both internal network and external network application scenarios through switching control, thereby improving the flexibility and reliability of the communication system with isolation between an internal network and an external network.

Optionally, the common band radio chip 104 is connected to a switching switch, and the MCU is also connected to the switching switch. By controlling the switching switch, the MCU can control the common band radio chip 104 to connect to the internal network subsystem 102 or connect to the external network subsystem 103, thereby switching the common band to the internal network or to the external network.

Optionally, the MCU is configured to control the switching of the third band unit and the fourth band unit, where the third band unit is arranged in the internal network subsystem 102, and the fourth band unit is arranged in the external network subsystem 103.

Optionally, the first radio chip further includes a third band unit, and the second central processing unit 502 further includes a fourth band unit; where a signal band of the third band unit is a third band, and a signal band of the fourth band unit is a fourth band; and the MCU is configured to send a switching signal to the first central processing unit 501 and the second central processing unit 502 to control whether to enable a network service of the third band unit through the first central processing unit 501 or to enable a network service of the fourth band unit through the second central processing unit 502.

Herein, the communication system with isolation between an internal network and an external network provided in the embodiments of this application is configured with a common band radio chip 104 to output a signal of a common band different from signals of the internal network subsystem 102 and the external network subsystem 103. The common band radio chip 104 may be an independent radio chip, or may be implemented based on a chip inside the internal network subsystem 102 or a chip inside the external network subsystem 103. Optionally, the network of the common band radio chip 104 may be flexibly switched to the internal network subsystem 102 or the external network subsystem 103 according to settings. The solution of using a shared and switchable radio frequency channel can meet the transmission requirements of both the internal network subsystem and the external network subsystem for different bands. Compared to a solution where two APs require deployment of two common parts, this solution requires only one common part, thereby simplifying the system structure and further reducing costs.

Optionally, FIG. 5 is a schematic diagram of a framework structure of yet another communication system with isolation between an internal network and an external network according to an embodiment of this application. As shown in FIG. 5, the communication system with isolation between an internal network and an external network provided in the embodiment of this application includes an internal network subsystem 102, an external network subsystem 103, a combiner system 101, and a microcontroller unit 500.

The internal network subsystem 102 includes a first central processing unit 501, and the external network subsystem 103 includes a second central processing unit 502.

Optionally, both the first central processing unit 501 and the second central processing unit 502 may be connected to the microcontroller unit 500 through an I2C bus or a universal asynchronous receiver/transmitter (UART) interface.

Optionally, the microcontroller unit 500 may be connected to the internal wired network and the external wired network by using any communication connection method such as a serial communication interface, an I-squared-C (I2C) bus, or a direct bus connection.

Optionally, when the communication system with isolation between an internal network and an external network includes a common band radio chip 104, the microcontroller unit 500 is configured to control the common band radio chip 104 to connect to the internal network subsystem 102 or to connect to the external network subsystem 103.

Optionally, the first central processing unit 501 is configured to send a first local area network address of the internal network subsystem 102 to the microcontroller unit 500. The second central processing unit 502 is configured to send a second local area network address of the external network subsystem 103 to the microcontroller unit 500.

The microcontroller unit 500 is configured to: receive the first local area network address of the internal network subsystem 102 and receive the second local area network address of the external network subsystem 103 corresponding to the internal network subsystem 102; and upload the first local area network address and the second local area network address to an AC, so that the AC configures the internal network subsystem 102 and the external network subsystem 103 corresponding to the internal network subsystem 102 as a companion network, and determines management and maintenance information of the internal network subsystem 102 or management and maintenance information of the external network subsystem 103 corresponding to the internal network subsystem 102 as maintenance information of the companion network.

A local area network address refers to a unique identifier assigned to a network device within a local area network, mainly used for mutual communication and identification between devices. The local area network address herein refers to a MAC address. Since the internal network subsystem 102 and the external network subsystem 103 are each provided with an independent CPU, and each CPU is internally provided with a MAC, the MAC address can characterize the uniqueness of the internal network subsystem 102 and the external network subsystem 103. The internal network subsystem 102 and the external network subsystem 103 can be bound by binding the unique local area network addresses of the internal network subsystem 102 and the external network subsystem 103.

The external network subsystem 103 corresponding to the internal network subsystem 102 is the external network subsystem 103 installed at a same physical location as the internal network subsystem 102.

Optionally, FIG. 6 is a schematic diagram of a control relationship between a microcontroller unit 500 and a first central processing unit 501 and a second central processing unit 502 according to an embodiment of this application. As shown in FIG. 6, the MCU coordinates and controls the two CPUs to transmit management data.

Both CPUs send their respective MAC and internet protocol (IP) addresses to the MCU through their respective management channels, which may be I2C buses or UART interfaces. After receiving the information from the two CPUs twice, the MCU combines the information and sends it to the AC. The AC end can then recognize the companion relationship between these two CPUs, thereby implementing the companion network function.

Optionally, after each CPU completes startup, it sends its MAC and IP addresses once. Upon detecting a heartbeat signal of the CPU, the MCU can determine that the CPU is online. If the information such as the MAC address sent by the CPU is not received, the MCU actively initiates a query through the interconnected I2C or UART interface, to ensure that the information is received.

Normally, one AP has only one MAC address, and the MAC address is used to uniquely identify the AP. The MAC information is recorded into the system together with the deployment location of the AP, so that the management interface of the system can display that the AP with MAC address ***** is located in room ****, thereby establishing a unique correspondence between the MAC address and the AP location. Once the system detects that the AP with MAC address **** is faulty, it can immediately know the location of the faulty AP, allowing for quick handling.

Referring to the foregoing embodiments, one AP includes two CPUs, and each CPU is provided with one MAC layer, so one AP includes two MAC addresses, where MAC address 1 corresponds to CPU1, and MAC address 2 corresponds to CPU2. To uniquely establish a relationship between the MAC addresses and the AP location, two MAC addresses need to be recorded. For the entire network device, it requires recording twice as many MAC addresses, greatly increasing the workload and increasing the likelihood of errors.

To solve the above problem, the concept of companion network is introduced. One AP includes an internal network subsystem 102 and an external network subsystem 103, each subsystem being provided with one CPU. The so-called companion, for a specific AP, means that the subsystems corresponding to the two CPUs belonging to a same AP are companion networks to each other. After the AP is properly powered on, both CPUs send their respective MAC information to the MCU through their respective management channels. The MCU end sends the two MAC addresses received to the management AC, that is, the management system. In this way, the management system knows that these two MAC addresses are at a same location, and therefore, in the step of recording and entering the MAC addresses and AP deployment location into the system, records only one of the MAC addresses on the AP. After the information is entered into the system, the system can find its companion network based on the recorded MAC address, that is, the MAC address of the other CPU on the same AP. Then, both the two MAC addresses are bound to the installation location of the AP, thereby establishing a relationship between the two MAC addresses and the installation location of the AP. Since both the two MAC addresses are bound to the installation location of the AP, the installation location of the AP can be found through either MAC address. In the future, regardless of at which MAC address the system detects a fault, the faulty AP can be found through the correspondence for maintenance.

In the embodiments of this application, the internal network subsystem 102 and the external network subsystem 103 are each provided with an independent CPU to manage its corresponding subsystem. Each CPU can collect the MAC address of its corresponding subsystem. Based on the foregoing structure, a companion network function is configured in the embodiments of this application. In this application, since one AP has two MAC addresses for the internal network and the external network, the MCU can report the two MAC addresses together to the AC. The AC side configures the two received MAC addresses as a pair of companion MAC addresses. Because the two companion MAC addresses are at a same installation location, one installation location can be associated with the two MAC addresses, thereby establishing a relationship between the two MAC addresses and the installation location of the AP. In the future, regardless of at which MAC address the system detects a fault, the faulty AP can be found through the correspondence for maintenance, thereby reducing the maintenance difficulty and maintenance costs of the system.

Optionally, the first central processing unit 501 is further configured to acquire first status information of the internal network subsystem 102, generate a first heartbeat packet based on the first status information, and send the first heartbeat packet to the microcontroller unit 500; the second central processing unit 502 is further configured to acquire second status information of the external network subsystem 103, generate a second heartbeat packet based on the second status information, and send the second heartbeat packet to the microcontroller unit 500; and the microcontroller unit 500 is configured to determine, based on the first heartbeat packet and the second heartbeat packet, whether the internal network subsystem 102 and the external network subsystem 103 have faults, and perform fault handling.

Optionally, the CPU may further transmit key information such as its health status to the MCU in the form of a heartbeat packet. The MCU analyzes the heartbeat packet to obtain a current status of the CPU. For an unhealthy CPU, the MCU operates a reset pin of the CPU to attempt a hardware reset of the CPU, with the aim of implementing a self-recovery function of the CPU.

In the embodiments of this application, each CPU can also be configured to acquire status information of its corresponding subsystem and transmit the status information to the MCU in the form of a heartbeat packet. The MCU analyzes the heartbeat packet to implement fault monitoring for the internal network subsystem 102 and the external network subsystem 103 and automatically perform fault handling, thereby improving the reliability, security, and stability of the system.

Optionally, the microcontroller unit 500 is further configured to: generate status information of the communication system with isolation between an internal network and an external network based on the first heartbeat packet and the second heartbeat packet; and upload the status information of the communication system with isolation between an internal network and an external network to an access controller, so that the access controller stores the status information of the communication system with isolation between an internal network and an external network.

Optionally, the MCU collects key configuration information, including but not limited to the current channel of the AP, transmit power, and whether power is externally supplied, and reports such information to the AC. Optionally, the key configuration information includes fault information for each key configuration. The AC stores the foregoing information, thereby implementing fault recording, or the AC may discover a fault based on the key configuration information and record the fault, facilitating troubleshooting and device maintenance.

Optionally, after the AC stores the status information of the communication system, it can display the status information of the communication system, or, in response to a call from operation and maintenance personnel, send the status information of the communication system to a terminal device of a user, facilitating troubleshooting and device maintenance by operation and maintenance personnel.

The MCU can also report real-time monitored status information of the communication system with isolation between an internal network and an external network to the AC. The AC can record faults based on the status information of the communication system with isolation between an internal network and an external network, facilitating troubleshooting and device maintenance, thereby reducing the maintenance difficulty and maintenance costs of the system.

Optionally, a buzzer is installed at a physical location corresponding to the companion network; and the microcontroller unit 500 is further configured to: in response to a sounding instruction for the buzzer, acquire buzzer information of the companion network corresponding to the sounding instruction for the buzzer; and generate a buzzer control instruction based on the buzzer information to control the buzzer installed at the physical location corresponding to the companion network to sound.

Optionally, the buzzer information may be included in the maintenance information.

Optionally, the buzzer information includes a buzzer identifier and/or a buzzer location.

Optionally, the buzzer herein may be a board-mounted device of the AP.

Optionally, the buzzer herein may alternatively be a device independent of the AP, separately installed at the physical location corresponding to the companion network, and the buzzer may be in communication connection with the AP.

Optionally, operation and maintenance personnel may initiate the sounding instruction for the buzzer through operations such as tapping and sending information on a terminal device or a server.

Currently, most AP devices are installed hidden in the suspended ceilings. With this installation method, once a specific AP fails, conventional maintenance methods cannot resolve the issue. When operations need to be performed on the AP, it is difficult to find the location of the AP. In the existing solution, after an AP is installed, the approximate location and MAC address of the AP are recorded and then entered into the system. Such solution can only roughly locate the AP position, but cannot implement accurate positioning. In the embodiments of this application, this problem is solved by installing a buzzer.

In the embodiments of this application, the control logic of the buzzer is as follows: When no control signal is input, the buzzer is in a non-sounding state. When a control signal of a certain frequency is input to the control circuit, the control circuit can perform level conversion on the control signal and transmit the signal to the buzzer, and the buzzer can then emit sound at a characteristic frequency. Depending on the frequency of the input control signal, the buzzer can produce sound at different volumes. When the input of the control signal stops, the buzzer stops sounding.

In the embodiments of this application, the control signal is generated by the on-board MCU.

In the embodiments of this application, a trigger switch for the buzzer is designed at the AC and network end. Operation and maintenance personnel only need to press the switch to trigger the buzzer of the corresponding AP to sound.

Optionally, considering that the buzzer may affect and discomfort patients, in the embodiments of this application, the buzzer is configured as follows:

Specifically, in the application scenario of a medical system, the loudness of the buzzer needs to be strictly debugged and tested during production. The loudness of the buzzer is limited to be greater than a first preset loudness and less than a second preset loudness, ensuring that operation and maintenance personnel can hear it when nearby, but the sound is not loud enough to be heard by a large number of patients, thereby improving user experience. The first preset loudness and the second preset loudness are not specifically limited in the embodiments of this application, and may be determined based on actual conditions. In other application scenarios, the loudness of the buzzer may alternatively not be limited.

Optionally, location information of operation and maintenance personnel is monitored, and a sounding switch of the buzzer is turned on only when it is detected that the operation and maintenance personnel are near an approximate location of the AP. After the AP location is found, it is recommended to quickly turn off the sounding switch of the buzzer to avoid prolonged sounding affecting patient rest. Optionally, a trigger condition for turning off the buzzer switch may be: it is detected that a distance between the operation and maintenance personnel and the AP location is less than a preset distance, or an operation of turning off the corresponding switch set by the operation and maintenance personnel on the buzzer is received. The preset distance is not specifically limited in the embodiments of this application, and may be determined based on actual conditions. A plurality of buzzer control solutions are provided, improving the flexibility of system maintenance and enhancing user experience.

Other than facilitating operation and maintenance personnel in finding the AP, the buzzer is not triggered in other fault scenarios. This ensures that the buzzer does not sound when operated by non-professionals, thereby avoiding affecting patients.

In the embodiments of this application, a buzzer is arranged at the installation location of the AP. Once a specific AP fails, operation and maintenance personnel can initiate a buzzer sounding instruction in the system, and the system can trigger the buzzer at the corresponding installation location of the AP to sound, thereby implementing accurate positioning of the faulty AP and facilitating quick location of the faulty AP by operation and maintenance personnel for maintenance.

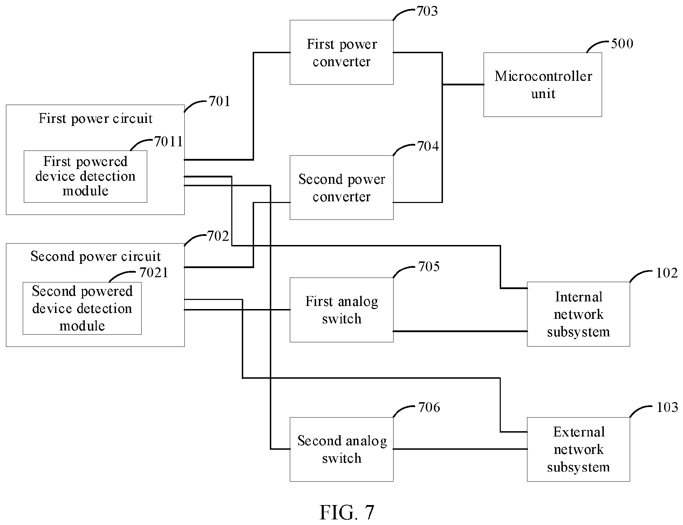

Optionally, in the embodiments of this application, dual power supplies are further provided. Correspondingly, FIG. 7 is a schematic diagram of a framework structure of a power supply system of a communication system with isolation between an internal network and an external network according to an embodiment of this application. As shown in FIG. 7, the power supply system includes a first power circuit 701 and a second power circuit 702.

The first power circuit 701 is configured to supply power to the internal network subsystem 102; and the second power circuit 702 is configured to supply power to the external network subsystem 103.

In the embodiments of this application, independent power circuits are configured for the internal network subsystem 102 and the external network subsystem 103 respectively to supply power to the internal network subsystem 102 and the external network subsystem 103, improving system stability.

Optionally, as shown in FIG. 7, the power supply system of the foregoing communication system with isolation between an internal network and an external network further includes a microcontroller unit 500, a first power converter 703, and a second power converter 704; where the first power converter 703 is configured to convert first electrical energy output by the first power circuit 701 to obtain first converted electrical energy, and output the first converted electrical energy to supply power to the microcontroller unit 500; and the second power converter 704 is configured to convert second electrical energy output by the second power circuit 702 to obtain second converted electrical energy, and output the second converted electrical energy to supply power to the microcontroller unit 500.

Herein, since the voltage required for MCU power supply is smaller, while the voltages of the first power circuit 701 and the second power circuit 702 for supplying power to the internal network subsystem 102 and the external network subsystem 103 are larger, the first power circuit 701 and the second power circuit 702 cannot directly supply power to the MCU. Therefore, it is necessary to configure the first power converter 703 and the second power converter 704 to perform voltage conversion processing on the first power circuit 701 and the second power circuit 702 to reduce the voltage and meet the power supply needs of the MCU, thereby improving the safety and lifespan of the system.

In the embodiments of this application, a first power converter 703 and a second power converter 704 are arranged, and an MCU is arranged to manage the communication system with isolation between an internal network and an external network. The power of the MCU comes from the first converted electrical energy obtained by converting the output electrical energy of the first power circuit 701 through the first power converter 703, and comes from the second converted electrical energy obtained by converting the output electrical energy of the second power circuit 702 through the second power converter 704. These two DCDC converters and the corresponding power circuits are mutually independent. As long as one of the power sources has electricity, the MCU can operate normally, improving the stability of the communication system with isolation between an internal network and an external network and ensuring the normal and stable operation of the communication system with isolation between an internal network and an external network.

Optionally, as shown in FIG. 7, the first power circuit 701 includes a first powered device detection module 7011, and the second power circuit 702 includes a second powered device detection module 7021.

The first powered device detection module 7011 is configured to send a first indication signal to the microcontroller unit 500, where the first indication signal is used to indicate a power supply status of the first power circuit 701; the second powered device detection module 7021 is configured to send a second indication signal to the microcontroller unit 500, where the second indication signal is used to indicate a power supply status of the second power circuit 702; and the microcontroller unit 500 is configured to determine the power supply status of the first power circuit 701 and the power supply status of the second power circuit 702 through the first indication signal and the second indication signal, and control, based on the power supply status of the first power circuit 701 and the power supply status of the second power circuit 702, whether the first power circuit 701 supplies power to the internal network subsystem 102 and/or the external network subsystem 103, and whether the second power circuit 702 supplies power to the internal network subsystem 102 and/or the external network subsystem 103.

Herein, the first powered device detection module 7011 is configured to detect the power supply status of the first power circuit 701, and the second powered device detection module 7021 is configured to detect the power supply status of the second power circuit 702, where the power supply status includes whether there is a fault and its power. The detected information is converted into a first indication signal and a second indication signal and sent to the MCU. The MCU determines the power supply status of the first power circuit 701 and the second power circuit 702 based on the first indication signal and the second indication signal to implement coordinated control, thereby ensuring power supply to each subsystem.

Optionally, the power supply status includes whether there is a fault and output power.

Optionally, as shown in FIG. 7, the power supply system provided in the embodiments of this application further includes a first analog switch 705 and a second analog switch 706.

In some embodiments, a first end of the first power circuit 701 is connected to the microcontroller unit 500 through the first power converter 703, and a first end of the second power circuit 702 is connected to the microcontroller unit 500 through the second power converter 704; a second end of the first power circuit 701 is connected to the internal network subsystem 102, and a third end of the first power circuit 701 is connected to the external network subsystem 103 through the first analog switch 705; and a second end of the second power circuit 702 is connected to the external network subsystem 103, and a third end of the second power circuit 702 is connected to the internal network subsystem 102 through the second analog switch 706.

Optionally, the microcontroller unit 500 may perform operations of turning on and turning off the switch of each power supply, thereby flexibly controlling the power supply status of the two power sources and achieving the goal of adapting to various power supply scenarios. Through dual power supplies, a power disaster recovery function is implemented. Even if one power source fails, the power supply of the overall system is still not affected, improving the reliability of the communication system with isolation between an internal network and an external network.

Optionally, a third analog switch and a fourth analog switch are further included; where the third band unit is connected to the first power circuit 701 through the third analog switch; and the fourth band unit is connected to the second power circuit 702 through the fourth analog switch.

It should be noted that through the switching of the third analog switch and the fourth analog switch, the power supply to the RF path of the common band is controlled.

Through the third analog switch and the fourth analog switch, the power supply to the common radio frequency part circuit can be ensured, further improving the reliability of the communication system with isolation between an internal network and an external network.

Specifically, the MCU can separately control the first analog switch 705, the second analog switch 706, the third analog switch, and the fourth analog switch to turn off.

Optionally, the first power converter 703 and the second power converter 704 are DCDC converters, configured to limit the voltage within 3.3 V as set by the MCU. The first power converter 703 is DCDC1, and the second power converter 704 is DCDC2.

Optionally, the first power circuit 701 and the second power circuit 702 are power over ethernet (PoE) DCDC converters. The first power converter 703 is PoE1, and the second power converter 704 is PoE2.

Optionally, both the first power circuit 701 and the second power circuit 702 are provided with DCDC converters for flexibly controlling circuit output powers of the first power circuit 701 and the second power circuit 702.

The specific control method is as follows:
The power of the MCU comes from two mutually independent DCDC power converters, namely DCDC1 or DCDC2. As long as one of the power sources has electricity, the MCU can operate normally. The input power of the two DCDC power converters come from two different PoE circuits, namely the PoE1 circuit and the PoE2 circuit. Such design ensures that the MCU can start normally, regardless of which PoE circuit supplies power.

The MCU can receive an indication signal from the PoE circuit, and determine, by analyzing the indication signal, the operation states that the first analog switch to the fourth analog switch should be in. Adaptation to different power supply scenarios can be realized by controlling the first analog switch to the fourth analog switch.

The output voltages of the powered device (PD) detection modules in the two PoE circuits are both supplied to the power sourcing equipment chip (PSE). Such design ensures that the device has PSE functionality, regardless of which PoE circuit supplies power. The specific enabling or disabling of the PSE function is controlled by an enable function of the PSE chip. The control permission is given to the MCU, which can also determine, based on the input status, whether to enable the PSE function.

The output of the PoE1 circuit directly powers part of the circuits of the internal network subsystem 102, and similarly, the output of the PoE2 circuit directly powers part of the circuits of the external network subsystem 103. Such design can reduce the need for two analog switches, thereby lowering costs.

The common part circuits need to be supplied with power, regardless of how the device is powered on. Therefore, the output of the PoE1 circuit and the output of the PoE2 circuit supply power to the common part through the third analog switch and the fourth analog switch, respectively. When the PoE1 circuit is active, the MCU controls the third analog switch to open and the fourth analog switch to close; similarly, when the PoE2 circuit is active, the MCU controls the fourth analog switch to open and the third analog switch to close.

Through the foregoing circuit design, adaptation to power supply needs for different power supply scenarios and different functions can be realized.

The causes for adopting the dual PoE power solution are analyzed as follows:
PoE is a technology for powering a device through a network cable. It complies with three standards: AF, AT, and BT, which correspond to different supply powers, where AT corresponds to 25.5 W and BT corresponds to 71 W. In this solution, since the power of AT is lower and the power of BT is higher, AT can power only some functions, while BT can power all functions.

Optionally, the logic of the foregoing first and second analog switches is as follows:

When both PoE1 and PoE2 are AT or both are BT, the first/second analog switches are both closed.

In addition, analog switch 1 is closed only when PoE1 is BT; and when POE1 is AT, analog switch 1 is open.

The control logic of the third and fourth analog switches is as follows: Whichever subsystem is configured to enable the common band signal, then the switch corresponding to that subsystem is closed. For example, if the common band is configured for internal network use, then the third analog switch needs to be closed and the fourth analog switch needs to be open.

In this solution, one AP includes two RJ45 network ports, where network port 1 corresponds to the internal network subsystem 102 part, and network port 2 corresponds to the external network subsystem 103 part. Therefore, to maximize ease of use, users are allowed to configure whether the internal network subsystem 102 is used as the internal network or the external network subsystem 103 is used as the internal network.

The possible usage scenarios for users include the following:
Scenario 1: Only network port 1 is connected with a network cable and the PoE power is AT: This corresponds to a scenario where a user only uses the internal network subsystem 102 as the internal network.
Scenario 2: Network port 1 is connected with a network cable, and the PoE power is BT; network port 2 is connected with a network cable without a power supply function: This corresponds to a scenario where a user uses the internal network subsystem 102 as the internal network and the external network subsystem 103 as the external network.
Scenario 3: Only network port 2 is connected with a network cable, and the PoE power is AT: This corresponds to a scenario where a user only uses the external network subsystem 103 as the internal network.
Scenario 4: Network port 2 is connected with a network cable, and the PoE power is BT; network port 1 is connected with a network cable without a power supply function: This corresponds to a scenario where a user uses the external network subsystem 103 as the internal network and the internal network subsystem 102 as the external network.
Scenario 5: Network port 1 is connected with a network cable, and the PoE power is AT; network port 2 is connected with a network cable, and the PoE power is AT: This corresponds to a scenario where a user uses the internal network subsystem 102 as the internal network and external network subsystem 103 as the external network, or uses the external network subsystem 103 as the internal network and the internal network subsystem 102 as the external network.
Scenario 6: Network port 1 is connected with a network cable, and the PoE power is BT; network port 2 is connected with a network cable, and the PoE power is BT: This corresponds to the power disaster recovery function.

Based on the foregoing scenario 1 and scenario 3, it can be seen that the user may connect a network cable with the PoE function to only one network port, and it is unknown which side the user connects the network cable to, because the user may want to use the internal network subsystem 102 as the internal network, or may want to use the external network subsystem 103 as the internal network. In this case, if the device only has a PoE circuit in the internal network subsystem 102 part, then when the user wants to use only the external network subsystem 103 as the internal network and only supplies PoE power to the external network subsystem 103, this configuration cannot be supported. To avoid restricting user usage, two mutually independent PoE power circuits are required, so that users can choose the PoE power supply scheme based on their requirements.

The two mutually independent ports allow users to select an appropriate PoE power supply scheme based on their own needs and the AT or BT power supply capability of their switches, ensuring that users can use the device as desired. In addition, the dual PoE power scheme also provides the power disaster recovery function for this solution, that is, corresponding to scenario 6. The specific implementation principle of the disaster recovery function is as follows:

The so-called power disaster recovery function means that one system has two power supply paths, both of which are normally in an operating state and have the capability to independently supply power to the entire system. Once one power supply path fails, the other power supply path can quickly take over the responsibility of the faulty power supply path, allowing the system to return to normal in a short time without requiring human intervention.

Specifically, in this solution,
the PoE1 circuit and the PoE2 circuit are two mutually independent power supply paths. In the normal operating state, the PoE1 circuit supplies power to the internal network subsystem 102 part, the PoE2 circuit supplies power to the external network subsystem 103 part, and the common part is powered by the internal network subsystem 102 part. In this case, the first analog switch 705, the second analog switch 706, and the fourth analog switch are all controlled by the MCU to be in an open state, and the third analog switch is controlled by the MCU to be in a closed state.

When the PoE1 circuit fails, the internal network subsystem 102 and the common part lose power, and an indication signal from the PoE1 circuit to the MCU informs the MCU of the power failure. After receiving the power failure signal, the MCU controls the first analog switch 705 and the third analog switch to open, and the second analog switch 706 and the fourth analog switch to close, thereby switching the power supply of the common part and the internal network subsystem 102 part to be handled by the PoE2 circuit. In this way, the common part and the internal network subsystem 102 part regain power, and the system resumes normal operation.

When the PoE2 circuit fails, the external network subsystem 103 part loses power, and an indication signal from the PoE2 circuit to the MCU informs the MCU of the power failure. After receiving the power failure signal, the MCU controls the second analog switch 706 and the fourth analog switch to open, and the first analog switch 705 and the third analog switch to close, thereby switching the power supply of the external network subsystem 103 part to be handled by the PoE1 circuit. In this way, the external network subsystem 103 part regains power, and the system resumes normal operation.

After the maintenance personnel rectify the power failure and the faulty power supply path regains power, the MCU receives an indication signal again, obtaining the information that the power supply has returned to normal. The MCU then operates the analog switches. The first analog switch 705, the second analog switch 706, and the fourth analog switch are all controlled by the MCU to be in an open state, and the third analog switch is controlled by the MCU to be in a closed state. This restores the system to the original normal state, allowing the system to continue to operate.

It can be understood that the structure illustrated in the embodiments of this application does not constitute a specific limitation on the architecture of the communication system with isolation between an internal network and an external network. In some other feasible implementations of this application, the foregoing architecture may include more or fewer components than shown in the figures, or a combination of some components, or some components split, or the components disposed differently, which may be specifically determined depending on actual application scenarios and is not limited herein. The components shown in FIG. 1 to FIG. 7 may be implemented in hardware, software, or a combination of software and hardware.

The terms "first", "second", "third", "fourth", and the like (if present) used in the specification, claims, and accompanying drawings of the embodiments of this application are used to distinguish between similar objects and are not necessarily used to describe a specific order or sequence. It should be understood that the data used in this manner is interchangeable in appropriate circumstances, such that the embodiments of this application described herein, for example, can be implemented in other orders than those illustrated or described herein.

In addition, the terms "include" and "have" and any of their variants are intended to cover a non-exclusive inclusion. For example, a process, method, system, product, or device that includes a series of steps or units is not necessarily limited to those steps or units expressly listed, but may include other steps or units not expressly listed or inherent to such process, method, product, or device.

The term "a plurality of" used herein refers to two or more. The term "and/or" in the specification merely describes an associative relationship between associated objects, indicating that three possible relationships may exist. For example, "A or B" may denote any of the following three scenarios: A exists alone, both A and B exist simultaneously, or B exists alone. In addition, the character "/" generally indicates that the associated objects have an "or" relationship; in formulas, the character "/" indicates that the associated objects have a "division" relationship.

It can be understood that various numerical numbers in the embodiments of this application are only for ease of description and distinction, and are not used to limit the scope of the embodiments of this application.

It can be understood that in the embodiments of this application, the sequence numbers of the foregoing processes do not imply any specific sequence of execution; rather, the execution order of each process should be determined based on its functionality and inherent logic, and shall not be construed as imposing any limitations on the implementation procedure of the embodiments of this application.

## Claims

1. A communication system with isolation between an internal network and an external network, comprising an internal network subsystem, an external network subsystem, and a combiner system, wherein the internal network subsystem and the external network subsystem are two systems with mutually independent data flows:
the internal network subsystem is connected to the combiner system and configured to output an internal network signal;
the external network subsystem is connected to the combiner system and configured to output an external network signal; and
the combiner system is configured to perform signal combining on the internal network signal output by the internal network subsystem and the external network signal output by the external network subsystem to output a combined signal.

2. The communication system with isolation between an internal network and an external network according to claim 1, wherein the internal network subsystem comprises a first radio chip, and the external network subsystem comprises a second radio chip;
the first radio chip is configured to process a network signal of a first band; and
the second radio chip is configured to process a network signal of a second band; wherein
the first band is different from the second band.

3. The communication system with isolation between an internal network and an external network according to claim 2, wherein the communication system further comprises a common band radio chip; wherein
the common band radio chip is configured to process a network signal of a common band, wherein the first band, the second band, and the common band are different from each other.

4. The communication system with isolation between an internal network and an external network according to any one of claims 1 to 3, wherein the combiner system comprises an internal network radio frequency power division network, an external network radio frequency power division network, and a combiner network; wherein
the internal network radio frequency power division network is configured to perform power division on the internal network signal output by the internal network subsystem to output a plurality of corresponding internal network sub-signals to the combiner network;
the external network radio frequency power division network is configured to perform power division on the external network signal output by the external network subsystem to output a plurality of corresponding external network sub-signals to the combiner network; and
the combiner network is configured to perform signal combining on the internal network sub-signals and the external network sub-signals to output the combined signal.

5. The communication system with isolation between an internal network and an external network according to any one of claims 1 to 4, wherein the combiner system comprises an internal network power amplification network, an external network power amplification network, and a combiner network; wherein
the internal network power amplification network is configured to perform amplification processing on the internal network signal output by the internal network subsystem to output an amplified internal network signal to the combiner network;
the external network power amplification network is configured to perform amplification processing on the external network signal output by the external network subsystem to output an amplified external network signal to the combiner network; and
the combiner network is configured to perform signal combining on the amplified internal network signal and the amplified external network signal to output the combined signal.

6. The communication system with isolation between an internal network and an external network according to any one of claims 1 to 5, wherein the communication system further comprises a microcontroller unit; wherein
when the communication system with isolation between an internal network and an external network comprises a common band radio chip, the microcontroller unit is configured to control the common band radio chip to connect to the internal network subsystem or to connect to the external network subsystem.

7. The communication system with isolation between an internal network and an external network according to claim 6, wherein the internal network subsystem comprises a first central processing unit, and the external network subsystem comprises a second central processing unit; wherein
the first central processing unit is configured to send a first local area network address of the internal network subsystem to the microcontroller unit;
the second central processing unit is configured to send a second local area network address of the external network subsystem to the microcontroller unit; and
the microcontroller unit is configured to:
receive the first local area network address of the internal network subsystem and receive the second local area network address of the external network subsystem, wherein the external network subsystem is an external network subsystem installed at a same physical location as the internal network subsystem; and
upload the first local area network address and the second local area network address to an access controller, so that the access controller configures the internal network subsystem and the external network subsystem as a companion network, and determines management and maintenance information of the internal network subsystem or management and maintenance information of the external network subsystem as maintenance information of the companion network.

8. The communication system with isolation between an internal network and an external network according to claim 7, wherein the first central processing unit is further configured to acquire first status information of the internal network subsystem, generate a first heartbeat packet based on the first status information, and send the first heartbeat packet to the microcontroller unit;
the second central processing unit is further configured to acquire second status information of the external network subsystem, generate a second heartbeat packet based on the second status information, and send the second heartbeat packet to the microcontroller unit; and
the microcontroller unit is configured to determine, based on the first heartbeat packet and the second heartbeat packet, whether the internal network subsystem and the external network subsystem have faults, and perform fault handling.

9. The communication system with isolation between an internal network and an external network according to claim 8, wherein the microcontroller unit is further configured to:
generate status information of the communication system with isolation between an internal network and an external network based on the first heartbeat packet and the second heartbeat packet; and
upload the status information of the communication system with isolation between an internal network and an external network to the access controller, so that the access controller stores the status information of the communication system with isolation between an internal network and an external network.

10. The communication system with isolation between an internal network and an external network according to any one of claims 7 to 9, wherein a buzzer is installed at a physical location corresponding to the companion network; and
the microcontroller unit is further configured to:
in response to a sounding instruction for the buzzer, acquire buzzer information of the companion network corresponding to the sounding instruction for the buzzer; and
generate a buzzer control instruction based on the buzzer information to control the buzzer at the physical location corresponding to the companion network to sound.

11. The communication system with isolation between an internal network and an external network according to any one of claims 1 to 10, wherein the communication system further comprises a first power circuit and a second power circuit:
the first power circuit is configured to supply power to the internal network subsystem; and
the second power circuit is configured to supply power to the external network subsystem.

12. The communication system with isolation between an internal network and an external network according to claim 11, wherein the first power circuit and the second power circuit are power over ethernet DC-DC converters.

13. The communication system with isolation between an internal network and an external network according to claim 11 or 12, wherein the communication system comprises a microcontroller unit, a first power converter, and a second power converter; wherein
the first power converter is configured to convert first electrical energy output by the first power circuit to obtain first converted electrical energy, and output the first converted electrical energy to supply power to the microcontroller unit; and
the second power converter is configured to convert second electrical energy output by the second power circuit to obtain second converted electrical energy, and output the second converted electrical energy to supply power to the microcontroller unit.

14. The communication system with isolation between an internal network and an external network according to claim 13, wherein the first power circuit comprises a first powered device detection module, and the second power circuit comprises a second powered device detection module; wherein
the first powered device detection module is configured to send a first indication signal to the microcontroller unit, wherein the first indication signal is used to indicate a power supply status of the first power circuit;
the second powered device detection module is configured to send a second indication signal to the microcontroller unit, wherein the second indication signal is used to indicate a power supply status of the second power circuit; and
the microcontroller unit is configured to determine the power supply status of the first power circuit and the power supply status of the second power circuit through the first indication signal and the second indication signal, and control, based on the power supply status of the first power circuit and the power supply status of the second power circuit, whether the first power circuit supplies power to the internal network subsystem and/or the external network subsystem, and whether the second power circuit supplies power to the internal network subsystem and/or the external network subsystem.
